(19) Europäisches Patentamt
European Patent Office
Office européen des brevets

(11) EP 2 293 633 B1

(12) **EUROPEAN PATENT SPECIFICATION**

(45) Date of publication and mention
of the grant of the patent:
**04.05.2016 Bulletin 2016/18**

(51) Int Cl.:
*H04W 72/04* (2009.01)     *H04W 48/08* (2009.01)
*H04W 68/00* (2009.01)     *H04W 72/00* (2009.01)

(21) Application number: **09768766.9**

(22) Date of filing: **19.06.2009**

(86) International application number:
**PCT/CN2009/072365**

(87) International publication number:
**WO 2009/155841 (30.12.2009 Gazette 2009/53)**

(54) **RESOURCE ALLOCATION METHOD, SYSTEM AND DEVICE**

VERFAHREN, SYSTEM UND VORRICHTUNG FÜR RESSOURCENZUWEISUNG

PROCÉDÉ, SYSTÈME ET DISPOSITIF D'ATTRIBUTION DE RESSOURCE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **24.06.2008 CN 200810068040**

(43) Date of publication of application:
**09.03.2011 Bulletin 2011/10**

(73) Proprietor: **Huawei Technologies Co., Ltd.
Longgang District
Shenzhen, Guangdong 518129 (CN)**

(72) Inventors:
• **QU, Bingyu**
  **Shenzhen**
  **Guangdong 518129 (CN)**
• **XUE, Lixia**
  **Shenzhen**
  **Guangdong 518129 (CN)**
• **LIU, Deping**
  **Shenzhen**
  **Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2007/003122     CN-A- 1 314 064
CN-A- 1 829 131     CN-A- 1 956 356

• CHINA MOBILE ET AL: "Discussion on potential requirements for a spectrum aggregation function", 3GPP DRAFT; R1-051369, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1 Meeting #43, no. Seoul, Korea; 20051031, 31 October 2005 (2005-10-31), XP002660693, www.3gpp.eu/ftp/tsg_ran/WG1_RL1/TSGR1_43/D ocs/ [retrieved on 2005-10-31]
• MOTOROLA: "Control Signalling Design for Supporting Carrier Aggregation", 3GPP DRAFT; R1-090792, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318649, [retrieved on 2009-02-03]
• QUALCOMM EUROPE: "Multicarrier Control for LTE-Advanced", 3GPP DRAFT; R1-090359, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090108, 8 January 2009 (2009-01-08), XP050318265, [retrieved on 2009-01-08]

## Description

## FIELD OF THE INVENTION

The present invention relates to a technology of network and communication, and in particular, to a method for allocating resource, a system, and a device.

## BACKGROUND OF THE INVENTION

In an current system, for example, a Long Term Evolution (LTE) system, a network entity notifies User Equipment (UE) of system bandwidth capable of being used by the UE in uplink and downlink through a broadcast signaling, for example, the UE is notified of a downlink bandwidth through a physical broadcast channel (PBCH), and the UE is notified of an uplink bandwidth through a dynamic broadcast channel (D-BCH). The UE determines a position of an allocated time frequency resource according to a detected resource allocation type, and receives or sends data by utilizing the time frequency resource.

The resource allocation types are several determined types for a network side entity and the UE. For example, in a downlink resource allocation method in the LTE system, the resource allocation types include type 0, type 1, and type 2. The resource allocation type is borne on a control channel, and delivered to the UE through control signaling.

For the resource allocation type being type 0, a resource block groups (RBGs) resource of the scheduled UE is indicated by using bitmap, and RBG is a minimum resource allocation granularity of the resource allocation type being type 0. A size of each RBG, that is, the number of resource blocks (RBs) in one RBG, is a function of a system bandwidth, as shown in Table 1. The system bandwidth is represented by the minimum number of the RBs, that is, $N_{RB}^{DL}$. In a resource allocation instruction,

$$N_{RBG} = \left\lceil N_{RB}^{DL} / P \right\rceil$$ bits are required to indicate allocation of time frequency resources of several RBGs, in which P is a size of the RBG, that is, the number of RBs in one RBG. Because P values corresponding to different system bandwidth are different, that is, the minimum granularities of resource allocation are different, in a condition of different bandwidth, numbers of bits occupied by resource allocation information are similar, and may not be linearly increased as the system bandwidth is increased.

**Table 1**

| System bandwidth $N_{RB}^{DL}$ | RB G Size ($P$) |
|---|---|
| ≤10 | 1 |
| 11-26 | 2 |

(continued)

| System bandwidth $N_{RB}^{DL}$ | RB G Size ($P$) |
|---|---|
| 27-63 | 3 |
| 64-110 | 4 |

In the same system bandwidth, numbers of bits occupied by resource allocation types being type 1 and type 0 are the same. However, for type 1 and type 0, the numbers of bits specifically being used to indicate the resource scheduled to the UE are different. For example, if each RBG in type 0 includes P RBs, type 1 divides the system bandwidth into P RBG subsets. Therefore, $\lceil \log_2(P) \rceil$ bits are required to indicate which RBG subset the time frequency resource scheduled to the UE is located in. Meanwhile, to indicate resources as many as possible, 1 bit is further used to indicate a starting direction of the resource allocation, that is, whether the bitmap indicates the resource allocation from left or from right. Therefore, the number of bits used to indicate the resource scheduled to the UE is

$$N_{RB}^{TYPE1} = \left\lceil N_{RB}^{DL} / P \right\rceil - \left\lceil \log_2(P) \right\rceil - 1.$$ Numbers of RBG subsets corresponding to the different system bandwidth are different, the resource scheduled to one UE is allocated in one RBG subset, so that in a condition of different system bandwidth, numbers of bits occupied by resource allocation information in the resource allocation type being type 1 are also similar, and may not be linearly increased as the system bandwidth is increased. Numbers of bits occupied by resource allocation signaling of the resource allocation types being type 1 and type 0 are the same. To distinguish whether the resource allocation type of the scheduled UE is type 1 or type 0, in a control channel corresponding to a time transmission unit, 1 bit is used to distinguish the resource allocation types being type 1 and type 0.

In a condition of the same system bandwidth, the number of bits used by a type 2 resource allocation signaling is different from those of type 0 and type 1, and specific resource allocation manners are also different. Specifically, in the resource allocation information, 1 bit represents whether physical resource blocks (PRBs) or virtual resource blocks (VRBs) are continuously allocated. PRB allocation can be performed from a single PRB to the maximum number of PRBs, and can include all RBs in the entire system bandwidth. For VRB allocation, the resource allocation information includes a sequence number of a starting VRB and several continuous VRBs, but each VRB is mapped to a plurality of discontinuous PRBs.

Because in the condition of the same system bandwidth, information lengths of the resource allocation types being type 0, type 1, and type 2 are not completely the same, the UE obtains a specific resource allocation type by performing blind detection on information lengths and information contents of the resource allocation.

However, in a future communication system, for example, an LTE-A system, a wider bandwidth is supported. That is, resources of a plurality of carriers can be scheduled to one UE simultaneously for being used, or a carrier bandwidth of one system can be expanded to a wider bandwidth. In the future communication system, a system bandwidth of a certain value is formed more flexibly. For example, a bandwidth of 20 M may be a continuous bandwidth of 20 M, may also be aggregation of 2 continuous spectrums of 10 M, or aggregation of 2 discrete spectnuns of 10 M, or aggregation of two spectrums of 5 M and one spectrum of 10 M. Because concrete aggregation forms have a certain relationship with a practical spectrum resource, network planning, and spectrum allocation among operators, the concrete aggregation forms may be indeterminate, and even may not be determined one by one in the standard. Therefore, a more flexible resource allocation manner is required.

WO 2007/002122 A1 discloses a method of allocating downlink traffic channel resources for multi carrier HSDPA, comprising: 1) selecting a carrier with optimum channel conditions; 2) determining whether the carrier meets resource demand of a downlink traffic channel, if yes, tuning to step 3); otherwise, turning to step 4); 3) allocating resources that meet the resource demand of the downlink traffic channel on the carrier, and finishing processing of the method; 4) allocating the available resources of the carrier to the downlink traffic channel, and selecting, according to remaining resource demand of the downlink traffic channel, a carrier with the optimum channel conditions among the remaining carriers for carrying out the resource allocation.

## SUMMARY OF THE INVENTION

Embodiments of the present invention provide a method for allocating resource, a system, and a device, so that flexible resource allocation is achieved.

An embodiment of the present invention provides a method for allocating resource. The method includes the following steps: Identification information about spectrum aggregating mode to be used by a UE and allocation information about resource to be used by the UE are determined, and the UE is notified of the identification information about spectrum aggregating mode to be used by the UE and the allocation information about resource to be used by the UE, wherein, the notifying the UE of the identification information about spectrum aggregating mode to be used by the UE and allocation information about resource to be used by the UE comprises:

> sending the identification information about spectrum aggregating mode and allocation information about resource to the UE by bearing the identification information about spectrum aggregating mode and allocation information about resource on a plurality of control channels, and bearing the plurality of control channels on one determined carrier.

An embodiment of the present invention provides a method for obtaining resource. The method includes the following steps: A UE receives spectrum aggregating mode identification information to be used by the UE and resource allocation information to be used by the UE (1101), obtains a time frequency resource available for the UE according to the spectrum aggregating mode identification information to be used by the UE (1102), and obtains position information of the time frequency resource according to resource allocation information of a spectrum resource to be used by the UE (1103), wherein, the identification information about spectrum aggregating mode and allocation information about resource to be used by the UE are sent by bearing the identification information about spectrum aggregating mode and allocation information about resource on a plurality of control channels, and bearing plurality of control channels on one determined carrier.

An embodiment of the present invention provides a communication system, which is configured to allocate a resource to a UE and includes a setting module, a first sending module, a determination module and a second sending module. The setting module is configured to determine a spectrum aggregating mode to be used by the UE and a concrete definition method of each spectrum aggregating mode. The first sending module is configured to send the spectrum aggregating mode to be used by the UE and the concrete definition method of each spectrum aggregating mode. The determination module, configured to determine identification information about spectrum aggregating mode to be used by the UE and allocation information about resource to be used by the UE. The a second sending module, configured to send the identification information about spectrum aggregating mode and allocation information about resource to the UE, wherein, the second sending module is configured to send the identification information about spectrum aggregating mode and allocation information about resource to the UE by bearing the identification information about spectrum aggregating mode and allocation information about resource on a plurality of control channels, and bearing the plurality of control channels on one determined carrier.

An embodiment of the present invention provides a UE, which includes a first receiving unit, a first obtaining unit, and a second obtaining unit. The first receiving unit is configured to receive spectrum aggregating mode identification information to be used by the UE and resource allocation information to be used by the UE. The first obtaining unit is configured to obtain a time frequency resource available for the UE according to the spectrum aggregating mode identification information to be used by the UE. The second obtaining unit is configured to obtain position information of the time frequency resource according to resource allocation information of a spectrum resource to be used by the UE. The identification information about spectrum aggregating mode and allocation information about resource to be used by the UE are sent by bearing the identification information about spectrum aggregating mode and allocation information about resource on a plurality of control channels, and bearing the plurality of control channels on one determined carrier.

By using the method for allocating resource, the system and the device provided by the present invention, spectrum aggregating modes used by a UE in a period of time and a concrete definition method of each spectrum aggregating mode are sent to the UE, so that changes of UE abilities, services, and a load of each carrier may be adapted. Furthermore, free spectrum aggregation can be supported, so that the flexibility of a resource allocation manner of the UE is not limited to the spectrum aggregation. Therefore, in a condition that a bandwidth is expanded without limitation, a flexible resource allocation method is provided. Specifically, flexible scheduling of the UE can be supported, for example, a higher rate or a lower rate, and limitation of the resource allocation method resulting from a very high rate is reduced. Furthermore, even if a newly allocated spectrum resource or a new spectrum aggregation manner exists, existing network layer protocols are not excessively modified.

**BRIEF DESCRIPTION OF THE DRAWINGS**

FIG. 1 shows an example of system bandwidth supporting different layers;

FIG. 2 is a diagram of a transmission mode supporting low-frequency carriers according to an embodiment of the present invention;

FIG. 3 is a diagram of a transmission mode supporting high-frequency carriers according to an embodiment of the present invention;

FIG. 4 is a diagram of a transmission mode supporting a bandwidth of 20 M according to an embodiment of the present invention;

FIG. 5 is a diagram of a transmission mode supporting a bandwidth of 60 M according to an embodiment of the present invention;

FIG. 6 shows a first example of the number of bits occupied by resource allocation information according to an embodiment of the present invention;

FIG. 7 shows a second example of the number of bits occupied by resource allocation information according to an embodiment of the present invention;

FIG. 8 shows a third example of the number of bits occupied by resource allocation information according to an embodiment of the present invention;

FIG. 9 shows a fourth example of the number of bits occupied by resource allocation information according to an embodiment of the present invention;

FIG. 10 shows an example of transmission of control signaling on carriers according to an embodiment of the present invention; and

FIG. 11 is a schematic flow chart for obtaining a resource according to an embodiment of the present invention.

**DETAILED DESCRIPTION OF THE EMBODIMENTS**

To support various spectrum aggregation manners possibly existing in a future communication system, for example, an LTE-A system, flexible resource allocation can be performed according to a practical condition of a UE and a network. In an embodiment, the present invention provides a method for allocating resource.

In the method for allocating resource according to the embodiment of the present invention, the network supports the UE to perform aggregation in a plurality of frequency bands, and the UE may adopt various aggregation modes in a period of time, so that changes of UE abilities, service demands, and a load of each carrier of the network can be adapted. Furthermore, a network side entity needs to notify the UE of a spectrum aggregating mode available for the UE and a concrete definition method of each spectrum aggregating mode.

The network side entity notifies the UE of the spectrum aggregating mode by using a UE Specific manner, that is, UE specific signaling, for example, by using Radio Resource Control (RRC) dedicated signaling; or by using a UE group-specific manner or a cell-specific manner, for example, using broadcast.

The spectrum aggregating mode may include: a carrier aggregating mode of different-layer frequencies; a carrier aggregating mode of bandwidth; a carrier aggregating mode of cell spectrum resource sharing; or an aggregation manner of spectrum/carrier interference coordination among cells. The aggregation manner of spectrum/carrier interference coordination among cells is particularly applied to a heterogeneous network structure, so as to prevent interferences between a macro-cell and a micro-cell. Several spectrum aggregating modes available for the UE in a period of time can be determined according to an aggregation ability supported by the UE, Quality of Service (QoS), or a service rate, service demands of a user, a position of the UE in a cell, or a resource use condition of the network.

In an embodiment of the present invention, when a spectrum aggregating mode is a carrier mode of different-layer frequencies, for example, when one UE supports a low-frequency transmission mode and a high-frequency transmission mode, spectrum aggregating modes available for the UE in a period of time are selected for the UE according to the position of the UE in the cell or the resource use condition of the network, in which the spectrum aggregating modes include a carrier aggregating mode for low-frequency carrier transmission, and the other carrier aggregating mode for high-frequency carrier transmission. In this manner, the network can flexibly perform the resource allocation in a low-frequency carrier or a high-frequency carrier.

In an embodiment of the present invention, a spectrum aggregating mode is a carrier aggregating mode of bandwidth, for example, when one UE supports different bandwidth, particularly when the UE can adopt multi-carrier aggregation supported by a plurality of radio frequency link structures, a certain or several radio frequency links can be opened and closed more flexibly. In this manner, spectrum aggregating modes available for the UE in a period of time may be selected for the UE according to changes of service demands of the UE, for example, a type of bandwidth used by a carrier aggregating mode is higher, and a type of bandwidth used by the other carrier aggregating mode is lower. In this manner, the network can flexibly perform the resource allocation on a type of higher bandwidth or a type of lower bandwidth.

In an embodiment of the present invention, a spectrum aggregating mode is a spectrum aggregating mode of cell spectrum resource sharing. For example, in a communication system, when a cell supports a spectrum sharing technology, a spectrum temporarily not used by the cell can be "lent" to other cells, so that frequency resources available for some cells increase, for example, the cells are cells of different frequencies of different operators at the same geographic position, or two cells of different coverage areas of the same operator. At this time, the system can be distinguished to be in a basic carrier scenario, that is, the system is only limited to adopt an available spectrum allocated to the cell, or the system can be distinguished to be in an expansion carrier scenario, that is, the system is capable of using the available spectrum allocated to the cell and a spectrum "borrowed" temporarily from an adjacent cell. The UE is notified of the spectrum aggregating modes available for the UE, in which one mode corresponds to the basic frequency scenario, and the other mode corresponds to the expansion carrier scenario. In this manner, the network can flexibly perform the resource allocation in the basic or expansion carrier aggregation scenario.

In an embodiment of the present invention, a spectrum aggregating mode can be an aggregation manner of spectrum/carrier interference coordination among cells, which is particularly applied to a heterogeneous network structure, so as to prevent interferences between a macro-cell and a micro-cell. For example, in a heterogeneous network, the macro-cell and the micro-cell adopt an interference coordination mechanism, and separately adopt different carriers or different powers of carriers for serving a UE in the cell. Here, covering demands or influences of interferences to other cells can be considered according to the position of the UE in the cell. When the UE is located on a cell edge or a position with more serious interferences to other cells, a coordinate carrier transmission mode among the cells is used, which includes coordination among different carriers or coordination among different power grades of the same carrier; and when the UE is located on a cell center or a position with smaller interferences to other cells, a non-coordinate carrier transmission mode among cells can be used. The UE is notified of various spectrum aggregating modes capable of being used by the UE, in which one mode corresponds to a coordinate mode of carriers among cells, and the other mode corresponds to a non-coordinate mode of carriers among cells. In this manner, the network can flexibly perform the resource allocation in the coordinate mode or the non-coordinate mode of the carriers among the cells.

In the resource allocation method according to the embodiment of the present invention, spectrum aggregating modes available for a UE in a period of time and a concrete definition method of each spectrum aggregating mode are sent to the UE, so that changes of UE abilities, services, and a load of each carrier may be adapted. Furthermore, free spectrum aggregation of each UE can be supported, so that the flexibility of a resource allocation manner of the UE is not limited to the spectrum aggregation. Therefore, in a condition that bandwidth is expanded without limitation, a flexible resource allocation method is provided. Specifically, flexible scheduling of the UE can be supported, for example, a higher rate, or a lower rate; or less carrier aggregation, or more carrier aggregation; or lower spectrum aggregation, or higher spectrum aggregation; or coordinate carrier aggregation for cell interference, or non-coordinate carrier aggregation for cell interference, flexible multi-carrier aggregation is supported, and limitation of the resource allocation method resulting from various aggregation scenarios is reduced. Furthermore, even if a newly allocated spectrum resource or a new spectrum aggregation manner exists, existing network layer protocols are not excessively modified.

In a resource allocation method according to an embodiment of the present invention, a network bears identification information about spectrum aggregating mode to be used by a UE and allocation information about resource to be used by the UE in a control channel of the UE, and sends the identification information about spectrum aggregating mode and the allocation information about resource to the UE. The identification information about spectrum aggregating mode and the allocation information about resource are sent to the UE by sending control signaling including the identification information about spectrum aggregating mode and the allocation information about resource to the UE; or by sending control signaling that includes the allocation information about resource and is scrambled by a scrambling code to the UE, in which the identification information about spectrum aggregating mode is implicitly distinguished through the scrambling code. The identification information about spectrum aggregating mode corresponds to a spectrum aggregating mode.

Before the network entity sends the identification information about spectrum aggregating mode and the allocation information about resource, the method further includes notifying the UE of several spectrum aggregating modes available for the UE and a concrete definition method of each spectrum aggregating mode.

The identification information about spectrum aggregating mode to be used by a UE can be notified in an explicit manner, for example, one field in control signaling is explicitly used to indicate the identification information about spectrum aggregating mode of the UE; or be notified in an implicit manner, for example, the identification information about spectrum aggregating mode of the UE is distinguished by using the identification information about spectrum aggregating mode to scramble a control channel.

Specifically, if the identification information about spectrum aggregating mode to be used by the UE is notified in the explicit manner, the number of bits occupied by the identification information about spectrum aggregating mode corresponds to the number of available spectrum aggregating modes. For example, if it is assumed that the number of the spectrum aggregating modes of the UE is N, while the number of the bits occupied by the identification information about spectrum aggregating mode is M, $M=\lceil \log_2(N) \rceil$, in which the symbol $\lceil \; \rceil$ represents rounding up.

Further, if the identification information about spectrum aggregating mode to be used by the UE is notified in the implicit manner, the identification information about spectrum aggregating mode can be distinguished by different scrambling codes used by the control signaling including the resource allocation information, or be implicitly borne in other manners.

The spectrum aggregating mode used by the UE is determined according to current service demands of the UE or the resource use condition of network.

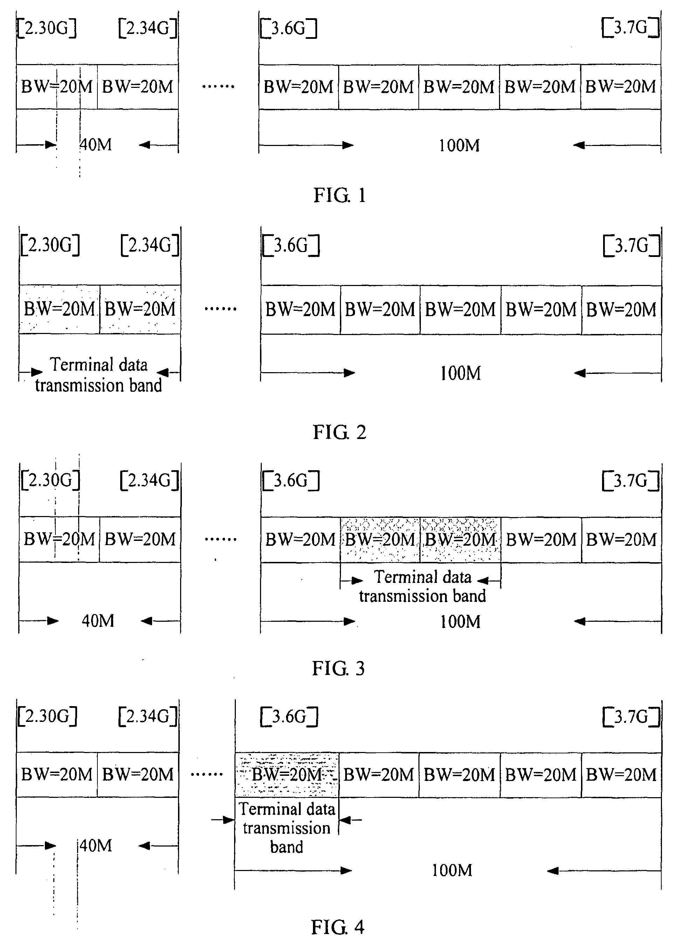

For example, two types of bandwidth exist, as shown in an example of system bandwidth in FIG. 1. In a low frequency band between 2.30 GHz and 2.34 GHz, two carriers of 20 MHz exist, so that 40 MHz bandwidth is totally achieved. In a high frequency band between 3.6 GHz and 3.7 GHz, five carriers exist, so that 100 MHz bandwidth is totally achieved.

For example, for one UE, a network side entity determines that the UE can adopt one carrier aggregating mode transmitting in a plurality of low-frequency carriers and the other carrier aggregating mode transmitting in a plurality of high-frequency carriers in a period of time, in which bandwidth of the low-frequency carriers and the high-frequency carriers both achieve 40 MHz. The UE is notified of the two available carrier aggregating modes in the period of time and a concrete definition method of each carrier aggregating mode. The UE flexibly performs resource allocation according to the resource use condition of the network. If it is determined that the UE performs transmission in the plurality of low-frequency carriers, carrier aggregating mode identification information transmitted by using the low-frequency carriers is borne on a control channel corresponding to a time transmission unit, and the carrier aggregating mode identification information transmitted by using the low-frequency carriers is sent to the UE, so as to indicate that the data is transmitted in the plurality of low-frequency carriers. A slash part in FIG. 2 represents a data transmission band of the UE. If it is determined that the UE adopts two continuous carriers in the high-frequency carriers for transmission, that is, between 3.62 GHz and 3.66 GHz, carrier aggregating mode identification information transmitted by using the high-frequency carriers is borne on a control channel corresponding to a time transmission unit, and the carrier aggregating mode identification information transmitted by using the high-frequency carriers is sent to the UE, so as to indicate that data is transmitted in the high-frequency carriers. A grid part in FIG. 3 represents a data transmission band of the UE.

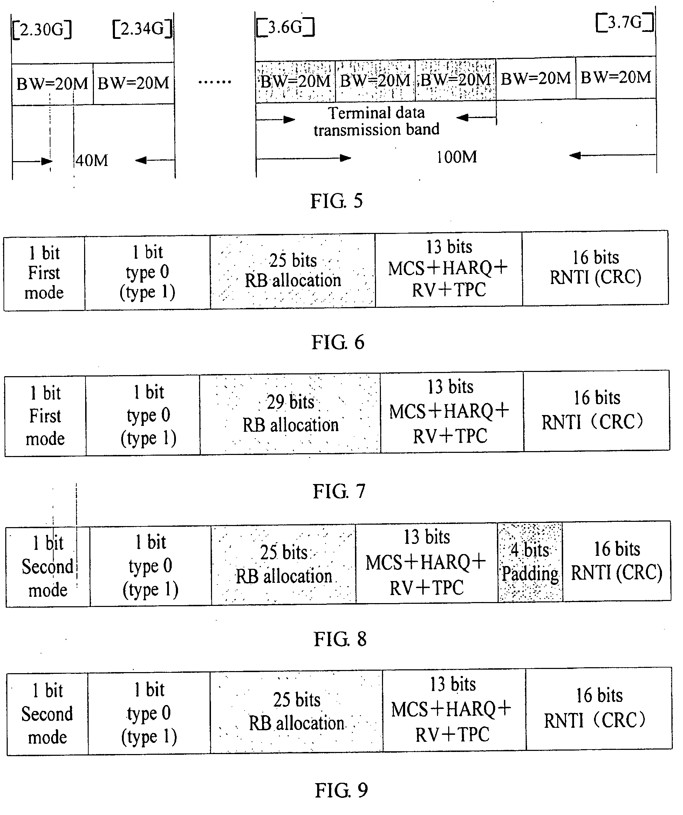

For example, for one UE, the network side entity determines that the UE may adopt the carrier aggregating modes at different bandwidth in a period of time, in which one type of bandwidth is 20 MHz, which satisfies general service demands, and the other type of bandwidth is 60 MHz, which can satisfy UE peak rate service demands. The network can dynamically adjust carrier resource allocation according to service demands and changes of the UE. Particularly, when the two bandwidth aggregation modes are achieved through different radio frequency link structures, if a network configuration adopts a type of lower bandwidth for data transmission, other radio frequency links can be closed, so as to effectively reduce consumption of a battery charge level of the UE. If it is determined that the UE adopts 20 MHz bandwidth for transmission, which is assumed to be between 3.60 GHz and 3.62 GHz, carrier aggregating mode identification information transmitted on the 20 MHz bandwidth is borne on a control channel corresponding to a time transmission unit, and the carrier aggregating mode identification information transmitted on the 20 MHz bandwidth is sent to the UE, so as to indicate that data is transmitted on the 20 MHz bandwidth. A transversal line part in FIG. 4 represents a data transmission band of the UE. If it is determined that the UE adopts a 60 MHz bandwidth for transmission, which is assumed to be between 3.60 GHz and 3.66 GHz, carrier aggregating mode identification information transmitted on the 60 MHz bandwidth is borne on a control channel corresponding to a time transmission unit, and the carrier aggregating mode identification information transmitted on the 60 MHz bandwidth is sent to the UE, so as to indicate that data is transmitted on the 60 MHz bandwidth. A vertical line part in FIG. 5 represents a data transmission band of the UE.

In the embodiment of the present invention, a network side entity determines that the UE can adopt a spectrum aggregating mode of cell spectrum resource sharing in a period of time, distinguishes carrier application scenarios of a system, determines whether the UE can adopt an available spectrum allocated to the cell or can adopt the available spectrum allocated to the cell and a spectrum temporarily "borrowed" from an adjacent cell, notifies the UE of a spectrum capable of being used, and indicates the UE to transmit data on a determined spectrum.

In the embodiment of the present invention, identification information about spectrum aggregating mode to be used by a UE and allocation information about resource to be used by the UE can be borne on one control channel and sent to the UE, and also can be borne on a plurality of control channels separately and sent to the UE. For example, when aggregation of a plurality of frequency bands is used by one UE, frequency domain characteristics of each frequency band are relatively independent, and each frequency band can correspond to at least one control channel, which includes the identification information about spectrum aggregating mode and allocation information about resource of the frequency band. In this manner, in a condition that the aggregation of the plurality of frequency bands is used by one UE, the network entity notifies a data scheduling condition of the UE by using a plurality of control channels, so that formats of a control channel in an existing system are not excessively increased in a condition of supporting carrier aggregation.

If the control channel corresponding to the UE can be transmitted on some carriers, in each time unit, that is, in one sub-frame, when the network entity transmits the control channel of the UE by using one carrier in some carriers, the carrier can be determined by notifying the UE of dedicated signaling or by using a randomization method known by the network and the UE. In this manner, the UE is prevented from performing blind detection on all carriers which may transmit the control channel in each time unit, so that the number of times the blind detection is performed by the UE on the control channel may be reduced, and processing complexity and battery consumption of the UE are also reduced.

In the embodiment of the present invention, allocation information of a spectrum resource scheduled to the UE is indicated by using the resource allocation types being type 0, type 1, and type 2. Whether the resource allocation type is type 2, type 0, or type 1 is distinguished by using the blind detection method, in which type 0 and type 1 are distinguished through type information specifically borne on the control signaling. If the spectrum aggregation makes the system bandwidth higher than 20 MHz, the method in the existing solution is used for type 0 and type 1, but a value of P is further increased, finally in a condition of different system bandwidth, the number of bits occupied by resource allocation information are similar, and may not be linearly increased as the system bandwidth is increased.

Allocation information about resource to be used by the UE is dynamically borne on a control channel corresponding to each time transmission unit. Numbers of bits occupied by the allocation information about resource to be used by the UE in the control channel corresponding to each time transmission unit are maintained as equal as possible, so that the number of times the blind detection is performed by the UE can be reduced.

In an embodiment of the present invention, a certain number of padding bits can be added behind the allocation information about resource, so that a final information length is maintained to be consistent with a length of the longest information in the control channel; or in an embodiment of the present invention, a method of other intermediate lengths can be used. In summary, for the same resource allocation type, or in a condition of resource allocation types having the same information length, for example, type 0 and type 1 having the same information length, the numbers of the bits occupied by the allocation information about resource in the control channel are the same, so that information lengths of the control signaling bearing the identification information about spectrum aggregating mode and allocation information about resource are maintained to be equal.

In a first method, in a condition of the same resource allocation type, lengths of allocation information about resource in various modes are aligned with a length of allocation information about resource requiring the greatest number of bits, so that the lengths of the allocation information about resource are the same.

It is assumed that a user of the UE supports two modes, both of which adopt the type 0 resource allocation manner. In a first mode, bandwidth of resource allocation is 20 MHz, and in a second mode, two spectrums of 20 MHz are aggregated for resource allocation.

For the system bandwidth of 20 MHz, the resource allocation needs

$$N_{RBG} = \left| N_{RB}^{DL}/P \right| = \lceil 100/4 \rceil = 25 bits,$$ and the number of bits occupied by the allocation information about resource is as shown by a left oblique cell in FIG. 6.

For the aggregation of two spectrums of 20 MHz, system bandwidth thereof can be considered as 40 MHz. If the P in Table 1 is used, the P corresponding to 40 MHz can be expanded into 7. The resource allocation needs $N_{RBG} = \left| N_{RB}^{DL}/P \right| = \lceil 200/7 \rceil = 29 bits$, and the number of bits occupied by the allocation information about resource is as shown by a right oblique cell in FIG. 7.

It can be known from FIG. 6 and FIG. 7 that, the number of bits occupied by the allocation information about resource in the first mode is 4 bits is less than that in the second mode. To make a final length be the same, it is necessary to pad 4 bits at the end of information in the first mode but in front of a CRC, and a padding result is as shown by a cross grid in FIG. 8.

In a second method, in a condition of the same resource allocation type, numbers of bits occupied by the allocation information about resource in various modes need to be compromised to a certain length. A P value in Table 1 can be modified, or the P value in Table 1 only represents a default. A user of the UE can be notified of modifying the value, in which the value is not fixed, so that lengths of resource allocation signaling information in various modes are the same.

As the example described in the foregoing, for the second mode of the aggregation of two spectrums of 20 MHz, system bandwidth of the mode can be considered as 40 MHz. If in the foregoing example, the P in corresponding Table 1 is defaulted as 7, the P can be modified into 8 through a signaling, the number of bits occupied by the allocation information about resource is

$$N_{RBG} = \left| N_{RB}^{DL}/P \right| = \lceil 200/8 \rceil = 25 \, bits,$$

the number of bits occupied by the allocation information about resource is as shown by a right oblique unit grid in FIG. 9, and the number of bits occupied by the allocation information about resource thereof is just the same as that in the first mode.

In the embodiment of the present invention, the number of times blind detection of a control channel is performed can be reduced by a combination of that available several carrier aggregating modes are notified by a semi-static signaling and that concrete carrier aggregating mode identification and concrete resource allocation information are indicated by a dynamic control channel.

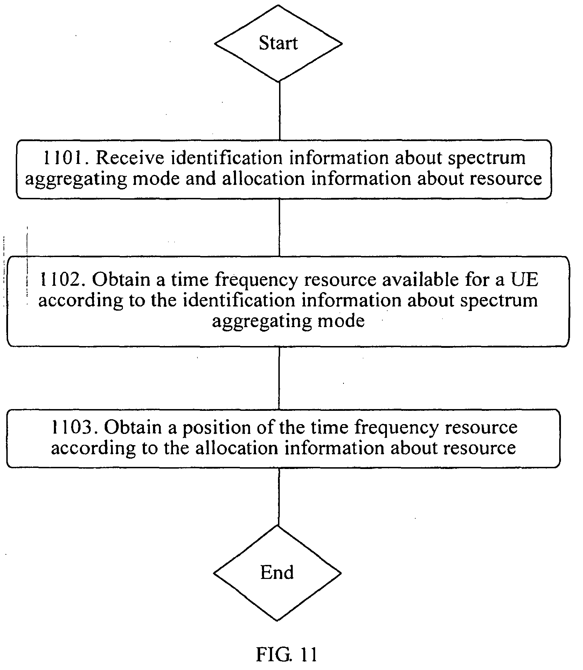

In an embodiment, the present invention provides method for obtaining a resource. As shown in FIG. 11, the method includes:

> In step 1101, receive identification information about spectrum aggregating mode and allocation information about resource.
> In step 1102, obtain a time frequency resource available for a UE according to the identification information about spectrum aggregating mode.
> In step 1103, obtain a position of the time frequency resource according to the allocation information about resource.

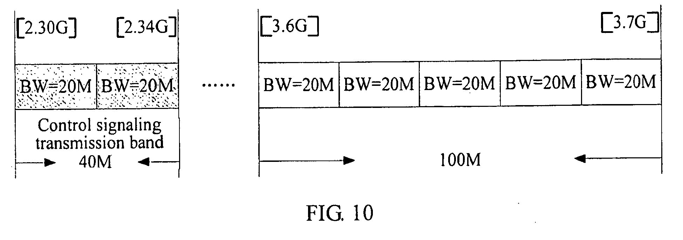

In the embodiment of the present invention, the identification information about spectrum aggregating mode and allocation information about resource are borne on a control channel corresponding to each time unit and sent to the UE. A frequency domain position occupied by transmission of the control channel can be transmitted on a certain or some carriers. For example, the control channel is only transmitted on several low-frequency carriers, as shown in FIG. 10. The UE obtains content of the control channel, obtains the identification information about spectrum aggregating mode according to the content of the control channel, and then obtains allocation information of a data channel, that is, position information of t the data channel transmission, by means of the allocation information about resource.

If a control channel corresponding to the UE can be transmitted on some carriers, in each time unit, the network entity transmits the control channel by using one carrier in some carriers, and the carrier can be notified the UE by dedicated signaling or the carrier can be determined by using a randomization method known by the network and the UE. In this manner, the UE is prevented from performing blind detection on all carriers which may transmit the control channel in each time unit, so that the number of times of the blind detection may be reduced.

When the position of the time frequency resource is obtained according to the allocation information about resource, a resource allocation type is obtained in a blind detection manner and/or through resource type indication information borne on control signaling, so as to determine position information of the time frequency resource.

Before receiving the identification information about spectrum aggregating mode and allocation information about resource, the method further includes receiving a spectrum aggregating mode available for the UE and a definition method of each spectrum aggregating mode, and obtaining a time frequency resource available for the UE according to spectrum aggregating mode information and the definition method of the spectrum aggregating mode.

The method further includes that the UE receives or sends data by using the time frequency resource.

An embodiment of the present invention further provides a communication system, which is configured to allocate a resource to a UE, and includes a setting module and a first sending module.

The setting module is configured to determine a spectrum aggregating mode and a concrete definition method of each spectrum aggregating mode.

The first sending module is configured to send the spectrum aggregating mode and the concrete definition method of the spectrum aggregating mode.

The system further includes a determination module, configured to determine identification information about spectrum aggregating mode to be used by a UE and allocation information about resource to be used by the UE.

The system further includes a second sending module, configured to send the identification information about spectrum aggregating mode and allocation information about resource.

An embodiment of the present invention further provides a UE, which includes a first receiving unit, a first obtaining unit, and a second obtaining unit.

The first receiving unit is configured to receive identification information about spectrum aggregating mode and allocation information about resource.

The first obtaining unit is configured to obtain a time frequency resource available for a UE according to the identification information about spectrum aggregating mode.

The second obtaining unit is configured to obtain position information of the time frequency resource according to resource allocation information of a spectrum resource.

The UE further includes a second receiving unit, configured to receive a spectrum aggregating modes available for the UE and a definition method of each spectrum aggregating mode.

The first obtaining unit is configured to obtain the time frequency resource according to the identification information about spectrum aggregating mode and the definition method of the spectrum aggregating mode corresponding to the identification information about spectrum aggregating mode.

The UE further includes a processing unit, configured to receive data or send data by using the obtained time frequency resource.

Persons skilled in the art can understand that information and messages may be represented by using any one of many different techniques and technologies. For example, the messages and the information mentioned in the foregoing illustration can be represented by voltages, currents, electromagnetic waves, magnetic fields or magnetic particles, optical fields, or any combination thereof.

Further, persons skilled in the art should further realize that the various illustrative units and steps of the method described in connection with the embodiments disclosed herein may be implemented through electronic hardware, computer software, or a combination thereof. To clearly illustrate interchangeability of hardware and software, various illustrative components and steps have been described generally in terms of their functions. Whether the functions are executed in hardware or software manner depends upon the specific application and design constraint conditions of the technical solution. Persons skilled in the art can implement the described functions in varying ways for each specific application, but the implementation should not be interpreted as departure from the scope of the present invention.

The steps of the method or algorithms described in connection with the embodiments disclosed herein can be embodied in hardware, a software module executed by a processor, or a combination thereof. The software module can reside in a Random Access Memory (RAM), a memory, a Read-Only Memory (ROM), an electrically programmable ROM, an electrically erasable programmable ROM, a register, a hard disk, a removable disk, a Compact Disk Read-Only Memory (CD-ROM), or any other forms of storage mediums known in the art.

It is apparent to persons skilled in the art that various modifications and variations can be made to the present invention without departing from the scope of the invention. In view of the foregoing, it is intended that the present invention cover modifications and variations of this invention provided they fall within the scope of the following claims.

**Claims**

1. A resource allocation method comprising:

determining identification information about spectrum aggregating mode to be used by User Equipment, UE, and allocation information about resource to be used by the UE; and notifying the UE of the identification information about spectrum aggregating mode to be used by the UE and allocation information about resource to be used by the UE;

wherein, the notifying the UE of the identification information about spectrum aggregating mode to be used by the UE and allocation information about resource to be used by the UE comprises:

sending the identification information about spectrum aggregating mode and allocation information about resource to the UE by bearing the identification information about spectrum aggregating mode and allocation information about resource on a plurality of control channels, and bearing the plurality of control channels on one determined carrier.

2. The method according to claim 1, **characterized in that** before the notifying the UE of the identification information about spectrum aggregating mode to be used by the UE and allocation information about resource to be used by the UE, the method further comprises:

notifying a spectrum aggregating mode available for the UE and a concrete definition method of each spectrum aggregating mode.

3. The method according to claim 2, **characterized in that** the notifying the spectrum aggregating mode available for the UE and the concrete definition method of each spectrum aggregating mode comprises: notifying the spectrum aggregating mode available for the UE and the concrete definition method of each spectrum aggregating mode by using dedicated signaling, a UE-specific manner, a UE group-specific manner, or a cell-specific manner.

4. The method according to claim 2, **characterized in that** the notifying the spectrum aggregating mode available for the UE and the concrete definition method of each spectrum aggregating mode by using a UE-specific manner comprises: notifying the spectrum aggregating mode available for the UE and the concrete definition method of each spectrum aggregating mode by using Radio Resource Control, RRC, dedicated signaling.

5. The method according to any of claims 1 to 4, **characterized in that** the allocation information about resource is indicated by using a resource allocation type, and numbers of bits occupied by the allocation information about resource in a control channel are the same, wherein the allocation information about resource is indicated by the same resource allocation type or resource allocation types having the same information length.

6. The method according to claim 5, **characterized in that** in a condition of the same resource allocation type, lengths of allocation information about resource in various modes are aligned with a length of allocation information about resource requiring the greatest number of bits, so that the numbers of bits occupied by the allocation information about resource in the control channel are the same; or the numbers of bits occupied by the allocation information about resource in various modes are compromised to a certain length, so that the numbers of the bits occupied by the allocation information about resource in the control channel are the same.

7. A method for obtaining a resource comprising:

   receiving, by User Equipment, UE, identification information about spectrum aggregating mode to be used by the UE and allocation information about resource to be used by the UE (1101); and obtaining a time frequency resource available for the UE according to the identification information about spectrum aggregating mode to be used by the UE (1102), and obtaining position information of the time frequency resource according to the allocation information about resource of a spectrum resource to be used by the UE (1103); wherein, the identification information about spectrum aggregating mode and allocation information about resource to be used by the UE are sent by bearing the identification information about spectrum aggregating mode and allocation information about resource on a plurality of control channels, and bearing the plurality of control channels on one determined carrier.

8. The method according to claim 7, **characterized in that** it further compises: receiving, by the UE, a spectrum aggregating mode available for the UE and a definition method of each spectrum aggregating mode.

9. The method according to claim 7 or 8, **characterized in that**, the obtaining the position information of the time frequency resource according to the allocation information about resource (1103) comprises:

   obtaining a resource allocation type corresponding to the allocation information about resource, and determining the position information of the time frequency resource according to the resource allocation type.

10. The method according to claim 8, **characterized in that** the obtaining the time frequency resource available for the UE according to the identification information about spectrum aggregating mode comprises: obtaining the time frequency resource available for the UE according to the identification information about spectrum aggregating mode and the definition method of the spectrum aggregating mode corresponding to the identification information about spectrum aggregating mode.

11. A communication system configured to allocate a resource to User Equipment, UE, comprising a setting module, a first sending module, a determination module and a second sending module, wherein the setting module is configured to determine a spectrum aggregating mode to be used by the UE and a concrete definition method of each spectrum aggregating mode; the first sending module is configured to send the spectrum aggregating mode to be used by the UE and the concrete definition method of each spectrum aggregating mode; a determination module, configured to determine identification information about spectrum aggregating mode to be used by the UE and allocation information about resource to be used by the UE; and a second sending module, configured to send the identification information about spectrum aggregating mode and allocation information about resource to the UE; wherein, the second sending module is configured to send the identification information about spectrum aggregating mode and allocation information about resource to the UE by bearing the identification information about spectrum aggregating mode and allocation information about resource on a plurality of control channels, and bearing the plurality of control channels on one determined carrier.

12. User Equipment, UE, comprising: a first receiving unit, a first obtaining unit, and a second obtaining unit, wherein the first receiving unit is configured to receive identification information about spectrum aggregating mode to be used by the UE and allocation information about resource to be used by the UE; the first obtaining unit is configured to obtain a time frequency resource available for the UE according to the identification information about spectrum aggregating mode to be used by the UE; and the second obtaining unit is configured to obtain position information of the time frequency resource according to the allocation information about resource of a spectrum resource to be used by the UE; wherein, the identification information about spectrum aggregating mode and allocation information about resource to be used by the UE are sent by bearing the identification information about spectrum aggregating mode and allocation information about resource on a plurality of control channels, and bearing the plurality of control channels on one determined carrier.

13. The UE according to claim 12, **characterized in that** it further comprises:

a second receiving unit, configured to receive spectrum aggregating mode available for the UE and a definition method of each spectrum aggregating mode;

wherein the first obtaining unit is configured to obtain the time frequency resource according to the identification information about spectrum aggregating mode and the definition method of the spectrum aggregating mode corresponding to the identification information about spectrum aggregating mode.

**Patentansprüche**

1. Ressourcenvergabeverfahren, umfassend:

Bestimmen von Idenüfikationsinfbrmationen über einen durch ein Benutzergerät UE zu verwendenden Spektrumaggregierungsmodus und Vergabeinformationen über durch das UE zu verwendende Ressourcen; und Benachrichtigen des UE über die Identifikationsinformationen über den durch das UE zu verwendenden Spektrumaggregierungsmodus und die Vergabeinformationen über durch das UE zu verwendende Ressourcen;

wobei das Benachrichtigen des UE über die Identifikationsinformationen über den durch das UE zu verwendenden Spektrumaggregierungsmodus und die Vergabeinformationen über durch das UE zu verwendende Ressourcen Folgendes umfasst:

Senden der Identifikationsinformationen über den Spektrumaggregierungsmodus und der Vergabeinformationen über Ressourcen zu dem UE durch Tragen der Identifikationsinformationen über den Spektrumaggregierungsmodus und der Vergabeinformationen über Ressourcen auf mehreren Steuerkanälen und Tragen der mehreren Steuerkanäle auf einem bestimmten Träger.

2. Verfahren nach Anspruch 1, **dadurch gekennzeichnet, dass** das Verfahren vor dem Benachrichtigen des UE über die Identifikationsinformationen über den durch das UE zu verwendenden Spektrumaggregierungsmodus und die Vergabeinformationen über durch das UE zu verwendende Ressourcen ferner Folgendes umfasst:

Mitteilen eines für das UE verfügbaren Spektrumaggregierungsmodus und eines konkreten Definitionsverfahrens jedes Spektrumaggregierungsmodus.

3. Verfahren nach Anspruch 2, **dadurch gekennzeichnet, dass** das Mitteilen des für das UE verfügbaren Spektrumaggregierungsmodus und des konkreten Definitionsverfahrens jedes Spektrumaggregierungsmodus Folgendes umfasst: Mitteilen des für das UE verfügbaren Spektrumaggregierungsmodus und des konkreten Definitionsverfahrens jedes Spektrumaggregierungsmodus durch Verwendung von dedizierter Signalisierung, einer UE-spezifischen Weise, einer UE-gruppenspezifischen Weise oder einer zellenspezifischen Weise.

4. Verfahren nach Anspruch 2, dadurch gekennzeichet, dass das Mitteilen des für das UE verfügbaren Spektrumaggregierungsmodus und des konkreten Definitionsverfahrens jedes Spektrumaggregierungsmodus durch Verwendung einer UE-spezifischen Weise Folgendes umfasst: Mitteilen des für das UE verfügbaren Spektrumaggregierungsmodus und des konkreten Definitionsverfahrens jedes Spektrumaggregierungsmodus durch Verwendung von dedizierter "Radio Resource Control"- bzw. RRC-Signalisierung.

5. Verfahren nach einem der Ansprüche 1 bis 4, **dadurch gekennzeichnet, dass** die Vergabeinformationen über Ressourcen durch Verwendung eines Ressourcenvergabetyps angegeben werden und die Anzahlen von Bit, die von den Vergabeinformationen über Ressourcen in einem Steuerkanal eingenommen werden, gleich sind, wobei die Vergabeinformationen über Ressourcen durch denselben Ressourcenvergabetyp oder dieselben Ressourcenvergabetypen mit derselben Informationslänge angegeben werden.

6. Verfahren nach Anspruch 5, **dadurch gekennzeichnet, dass** in einem Zustand desselben Ressourcenvergabetyps Längen von Vergabeinformationen über Ressourcen in verschiedenen Modi mit einer Länge von Vergabeinformationen über Ressourcen, die die größte Anzahl von Bit erfordern, ausgerichtet sind, so dass die durch die Vergabeinformationen über Ressourcen in dem Steuerkanal eingenommenen Anzahlen von Bit gleich sind; oder die durch die Vergabeinformationen über Ressourcen in verschiedenen Modi eingenommenen Anzahlen von Bit bis auf eine bestimmte Länge kompromittiert werden, so dass die Anzahlen der durch die Vergabeinformationen über Ressourcen in dem Steuerkanal eingenommenen Bit gleich sind.

7. Verfahren zum Erhalten einer Ressource, umfassend:

Empfangen, durch ein Benutzergerät UE, von Identifikationsinformationen über den durch das UE zu verwendenden Spektrumaggregierungsmodus und von Vergabeinformationen über durch das UE zu verwendende Ressource (1101); und
Erhalten einer für das UE verfügbaren Zeit-Frequenz-Ressource gemäß den Identifikationsinformationen über durch das UE zu verwendende Spektrumaggregierungsmodus (1102) und Erhalten von Positionsinformationen der Zeit-Frequenz-Ressource gemäß den Vergabeinformationen über Ressourcen einer Spektrumressource, die durch das UE zu verwenden ist (1103);
wobei die Identifikationsinformationen über den Spektrumaggregierungsmodus und die Vergabeinformationen über die durch das UE zu verwendende Ressource gesendet werden durch Tragen der Identifikationsinformationen über den Spektrumaggregierungsmodus und der Vergabeinformationen über Ressourcen auf mehreren Steuerkanälen und Tragen der mehreren Steuerkanäle auf einem bestimmten Träger.

8. Verfahren nach Anspruch 7, **dadurch gekennzeichnet, dass** es ferner Folgendes umfasst: Empfangen eines für das UE verfügbaren Spektrumaggregierungsmodus und eines Definitionsverfahrens jedes Spektrumaggregierungsmodus durch das UE.

9. Verfahren nach Anspruch 7 oder 8, **dadurch gekennzeichnet, dass** das Erhalten der Positionsinformationen der Zeit-Frequenz-Ressource gemäß den Vergabeinformationen über Ressourcen (1103) Folgendes umfasst:

Erhalten eines Ressourcenvergabetyps entsprechend den Vergabeinformationen über Ressourcen und
Bestimmen der Positionsinformationen der Zeit-Frequenz-Ressource gemäß dem Ressourcenvergabetyp.

10. Verfahren nach Anspruch 8, **dadurch gekennzeichnet, dass** das Erhalten der für das UE verfügbaren Zeit-Frequenz-Ressource gemäß den Identifikationsinformationen über den Spektrumaggregierungsmodus Folgendes umfasst: Erhalten der für das UE, verfügbaren Zeit-Frequenz-Ressource gemäß den Identifikationsinformationen über den Spektrumaggregierungsmodus und dem Definitionsverfahren des Spektrumaggregierungsmodus, das den Identifikationsinformationen über den Spektrumaggregierungsmodus entspricht.

11. Kommunikationssystem, ausgelegt zum Vergeben einer Ressource an ein Benutzergerät UE, das ein Setzmodus, ein erstes Sendemodul, ein Bestimmungsmodul und ein zweites Sendemodul umfasst, wobei das Setzmodul ausgelegt ist zum Bestimmen eines durch das UE zu verwendenden Spektrumaggregierungsmodus und eines konkreten Definitionsverfahrens jedes Spektrumaggregierungsmodus;
das erste Sendemodul ausgelegt ist zum Senden des durch das UE zu verwendenden Spektrumaggregierungsmodus und des konkreten Defintionsverfahrens jedes Spektrumaggregierungsmodus;
ein Bestimmungsmodul, ausgelegt zum Bestimmen von Identifikationsinformationen über den durch das UE zu verwendenden Spektrumaggregierungsmodus und von Vergabeinformationen über durch das UE zu verwendende Ressourcen; und
ein zweites Sendemodul, ausgelegt zum Senden der Identifikationsinformationen über den Spektrumaggregierungsmodus und der Vergabeinformationen über Ressourcen zu dem UE;
wobei das zweite Sendemodul ausgelegt ist zum Senden der Identifikationsinformationen über den Spektrumaggregierungsmodus und der Vergabeinformationen über Ressourcen zu dem UE durch Tragen der Identifikationsinformationen über den Spektrumaggregierungsmodus und der Vergabeinformationen über Ressourcen auf mehreren Steuerkanälen und Tragen der mehreren Steuerkanäle auf einem bestimmten Träger.

12. Benutzergerät UE, umfassend: eine erste Empfangseinheit, eine erste Erhalteeinheit und eine zweite Erhalteeinheit, wobei
die erste Empfangseinheit ausgelegt ist zum Empfangen von Identifikationsinformationen über den durch das UE zu verwendenden Spektrumaggregierungsmodus und von Vergabeinformationen über durch das UE zu verwendende Ressourcen;
die erste Erhalteeinheit ausgelegt ist zum Erhalten einer für das UE verfügbaren Zeit-Frequenz-Ressource gemäß den Identifikationsinformationen über den durch das UE zu verwendenden Spektrumaggregierungsmodus; und
die zweite Erhalteeinheit ausgelegt ist zum Erhalten von Positionsinformationen der Zeit-Frequenz-Ressource gemäß den Vergabeinformationen über Ressourcen einer durch das UE zu verwendenden Spektrumressource;
wobei die Identifikationsinformationen über den Spektrumaggregierungsmodus und die Vergabeinformationen über die durch das UE zu verwendende Ressource gesendet werden durch Tragen der Identifikationsinformationen über den Spektrumaggregierungsmodus und der Vergabeinformationen über Ressourcen auf mehreren Steuerkanälen und Tragen der mehreren Steuerkanäle auf einem bestimmten Träger.

13. UE nach Anspruch 12, **dadurch gekennzeichnet, dass** es ferner Folgendes umfasst:

eine zweite Empfangseinheit, ausgelegt zum Empfangen des für das UE verfügbaren Spektrumaggregierungsmodus und eines Definitionsverfahrens jedes Spektrumaggregierungsmodus;
wobei die erste Erhalteeinheit ausgelegt ist zum Erhalten der Zeit-Frequenz-Ressource gemäß den Identifikationsinformationen über den Spektrumaggregierungsmodus und dem Definitionsverfahren des Spektrumaggregierungsmodus, das den Identifikationsinformationen über den Spektrumaggregierungsmodus entspricht.

**Revendications**

1. Procédé d'allocation de ressource comprenant :

la détermination d'informations d'identification sur un mode d'agrégation de spectre devant être utilisé par un équipement utilisateur, UE, et d'informations d'allocation sur une ressource à utiliser par l'équipement utilisateur UE, et
la notification faite à l'équipement utilisateur UE des informations d'identification sur le mode d'agrégation de spectre devant être utilisé par l'équipement utilisateur UE et des informations d'allocation sur la ressource à utiliser par l'équipement utilisateur, UE,
dans lequel la notification faite à l'équipement utilisateur UE des informations d'identification sur le mode d'agrégation de spectre devant être utilisé par l'équipement utilisateur UE et des informations d'allocation sur la ressource à utiliser par l'équipement utilisateur UE, comprend :

l'envoi à l'équipement utilisateur UE des informations d'identification sur le mode d'agrégation de spectre et des informations d'allocation sur la ressource en portant les informations d'identification sur le mode d'agrégation de spectre et les informations d'allocation sur la ressource sur une pluralité de canaux de contrôle, et en portant la pluralité de canaux de contrôle sur une porteuse déterminée.

2. Procédé selon la revendication 1, **caractérisé en ce que** le procédé comprend en outre, avant la notification faite à l'équipement utilisateur UE des informations d'identification sur le mode d'agrégation de spectre devant être utilisé par l'équipement utilisateur UE et des informations d'allocation sur la ressource à utiliser par l'équipement utilisateur UE :

la notification d'un mode d'agrégation de spectre disponible pour l'équipement utilisateur UE et d'un procédé de définition concrète de chaque mode d'agrégation de spectre.

3. Procédé selon la revendication 2, **caractérisé en ce que** la notification du mode d'agrégation de spectre disponible pour l'équipement utilisateur UE et du procédé de définition concrète de chaque mode d'agrégation de spectre comprend : la notification du mode d'agrégation de spectre disponible pour l'équipement utilisateur UE et du procédé de définition concrète de chaque mode d'agrégation de spectre en utilisant une signalisation spécialisée, un procédé spécifique à l'équipement utilisateur UE, un procédé spécifique à un groupe d'équipements utilisateur UE ou un procédé spécifique à une cellule.

4. Procédé selon la revendication 2, **caractérisé en ce que** la notification du mode d'agrégation de spectre disponible pour l'équipement utilisateur UE et du procédé de définition concrète de chaque mode d'agrégation de spectre réalisée en utilisant un procédé spécifique à l'équipement utilisateur UE comprend : la notification du mode d'agrégation de spectre disponible pour l'équipement utilisateur UE et du procédé de définition concrète de chaque mode d'agrégation de spectre en utilisant une signalisation spécialisée de contrôle de ressource radio, RRC.

5. Procédé selon l'une quelconque des revendications 1 à 4, **caractérisé en ce que** les informations d'allocation sur la ressource sont indiquées en utilisant un type d'allocation de ressource, et des nombres de bits occupés par les informations d'allocation sur la ressource dans un canal de contrôle sont identiques, les informations d'allocation sur la ressource étant indiquées par le type identique d'allocation de ressource ou par des types d'allocation de ressource présentant la même longueur d'informations.

6. Procédé selon la revendication 5, **caractérisé en ce que**, sous la condition d'un type identique d'allocation de ressource, des longueurs d'informations d'allocation sur une ressource dans divers modes sont alignées avec une longueur d'informations d'allocation sur une ressource nécessitant le nombre le plus grand de bits, de telle sorte que les nombres de bits occupés par les informations d'allocation sur la ressource dans le canal de contrôle sont identiques, ou les nombres de bits occupés par les informations d'allocation sur la ressource dans divers modes font l'objet d'un compromis établi sur une certaine longueur de telle sorte que les nombres de bits occupés par les informations d'allocation sur la ressource dans le canal de contrôle sont identiques.

7. Procédé de récupération d'une ressource comprenant :

la réception, par un équipement utilisateur, UE, d'informations d'identification sur un mode d'agrégation de spectre devant être utilisé par l'équipement utilisateur UE et d'informations d'allocation sur une ressource à utiliser par l'équipement utilisateur UE (1101), et
la récupération d'une ressource temps fréquence disponible pour l'équipement utilisateur UE en fonction des informations d'identification sur le mode d'agrégation de spectre devant être utilisé par l'équipement utilisateur UE (1102), et
la récupération d'informations de position de la ressource temps fréquence en fonction des informations d'allocation sur la ressource concernant une ressource de spectre devant être utilisée par l'équipement utilisateur UE (1103),
dans lequel les informations d'identification sur le mode d'agrégation de spectre et les informations d'allocation sur la ressource à utiliser par l'équipement utilisateur UE sont envoyées en portant les informations d'identification sur le mode d'agrégation de spectre et les informations d'allocation sur la ressource sur une pluralité de canaux de contrôle, et en portant la pluralité de canaux de contrôle sur une porteuse déterminée.

8. Procédé selon la revendication 7, **caractérisé en ce qu'**il comprend en outre la réception par l'équipement utilisateur UE d'un mode d'agrégation de spectre disponible pour l'équipement utilisateur UE et d'un procédé de définition de chaque mode d'agrégation de spectre.

9. Procédé selon la revendication 7 ou la revendication 8, **caractérisé en ce que** la récupération des informations de position de la ressource temps fréquence en fonction des informations d'allocation sur la ressource (1103) comprend :

la récupération d'un type d'allocation de ressource correspondant aux informations d'allocation sur la ressource, et
la détermination des informations de position de la ressource temps fréquence en fonction du type d'allocation de ressource.

10. Procédé selon la revendication 8, **caractérisé en ce que** la récupération de la ressource temps fréquence disponible pour l'équipement utilisateur UE en fonction des informations d'identification sur un mode d'agrégation de spectre comprend : la récupération de la ressource temps fréquence disponible pour l'équipement utilisateur UE en fonction des informations d'identification sur le mode d'agrégation de spectre et du procédé de définition du mode d'agrégation de spectre correspondant aux informations d'identification sur le mode d'agrégation de spectre.

11. Système de communication configuré pour allouer une ressource à un équipement utilisateur, UE, comprenant un module d'établissement, un premier module d'envoi, un module de détermination et un second module d'envoi, dans lequel :

le module d'établissement est configuré pour déterminer un mode d'agrégation de spectre devant être utilisé par l'équipement utilisateur UE et un procédé de définition concrète de chaque mode d'agrégation de spectre,
le premier module d'envoi est configuré pour envoyer le mode d'agrégation de spectre devant être utilisé par l'équipement utilisateur UE et le procédé de définition concrète de chaque mode d'agrégation de spectre,
un module de détermination configuré pour déterminer des informations d'identification sur un mode d'agrégation de spectre devant être utilisé par l'équipement utilisateur UE et des informations d'allocation sur une ressource à utiliser par l'équipement utilisateur UE, et
un second module d'envoi configuré pour envoyer à l'équipement utilisateur UE les informations d'identification sur le mode d'agrégation de spectre et les informations d'allocation sur la ressource,
dans lequel le second module d'envoi est configuré pour envoyer à l'équipement utilisateur UE les informations d'identification sur le mode d'agrégation de spectre et les informations d'allocation sur la ressource en portant les informations d'identification sur le mode d'agrégation de spectre et les informations d'allocation sur la ressource sur une pluralité de canaux de contrôle, et en portant la pluralité de canaux de contrôle sur une porteuse déterminée.

12. Équipement utilisateur, UE, comprenant une première unité de réception, une première unité de récupération et une seconde unité de récupération, dans lequel :

la première unité de réception est configurée pour recevoir des informations d'identification sur un mode d'agrégation de spectre devant être utilisé par l'équipement utilisateur UE et des informations d'allocation sur une ressource à utiliser par l'équipement utilisateur UE,

la première unité de récupération est configurée pour récupérer une ressource temps fréquence disponible pour l'équipement utilisateur UE en fonction des informations d'identification sur le mode d'agrégation de spectre devant être utilisé par l'équipement utilisateur UE, et

la seconde unité de récupération est configurée pour récupérer des informations de position sur la ressource temps fréquence en fonction des informations d'allocation sur la ressource concernant une ressource de spectre devant être utilisée par l'équipement utilisateur UE,

dans lequel les informations d'identification sur le mode d'agrégation de spectre et les informations d'allocation sur la ressource à utiliser par l'équipement utilisateur UE sont envoyées en portant les informations d'identification sur le mode d'agrégation de spectre et les informations d'allocation sur la ressource sur une pluralité de canaux de contrôle, et en portant la pluralité de canaux de contrôle sur une porteuse déterminée.

13. Équipement utilisateur UE selon la revendication 12, **caractérisé en ce qu'**il comprend en outre :

une seconde unité de réception, configurée pour recevoir un mode d'agrégation de spectre disponible pour l'équipement utilisateur UE et un procédé de définition de chaque mode d'agrégation de spectre,

dans lequel la première unité de récupération est configurée pour récupérer la ressource temps fréquence en fonction des informations d'identification sur le mode d'agrégation de spectre et du procédé de définition du mode d'agrégation de spectre correspondant aux informations d'identification sur le mode d'agrégation de spectre.

FIG. 1

FIG. 2

FIG. 3

FIG. 4

FIG. 5

| 1 bit<br>First<br>mode | 1 bit<br>type 0<br>(type 1) | 25 bits<br>RB allocation | 13 bits<br>MCS+HARQ+<br>RV+TPC | 16 bits<br>RNTI (CRC) |
|---|---|---|---|---|

FIG. 6

| 1 bit<br>First<br>mode | 1 bit<br>type 0<br>(type 1) | 29 bits<br>RB allocation | 13 bits<br>MCS+HARQ+<br>RV+TPC | 16 bits<br>RNTI（CRC） |
|---|---|---|---|---|

FIG. 7

| 1 bit<br>Second<br>mode | 1 bit<br>type 0<br>(type 1) | 25 bits<br>RB allocation | 13 bits<br>MCS+HARQ+<br>RV+TPC | 4 bits<br>Padding | 16 bits<br>RNTI (CRC) |
|---|---|---|---|---|---|

FIG. 8

| 1 bit<br>Second<br>mode | 1 bit<br>type 0<br>(type 1) | 25 bits<br>RB allocation | 13 bits<br>MCS+HARQ+<br>RV+TPC | 16 bits<br>RNTI（CRC） |
|---|---|---|---|---|

FIG. 9

[2.30G]     [2.34G]          [3.6G]                                                          [3.7G]

| BW=20M | BW=20M |
|--------|--------|

...... 

| BW=20M | BW=20M | BW=20M | BW=20M | BW=20M |
|--------|--------|--------|--------|--------|

Control signaling
transmission band
→ 40M ◄—

→                    100M                    ◄

FIG. 10

```
                    ┌───────────┐
                  ╱   Start   ╲
                  ╲           ╱
                    └───────────┘
                          │
  ┌───────────────────────────────────────────────────┐
  │ 1101. Receive identification information about spectrum │
  │ aggregating mode and allocation information about resource │
  └───────────────────────────────────────────────────┘
                          │
  ┌───────────────────────────────────────────────────┐
  │ 1102. Obtain a time frequency resource available for a UE │
  │ according to the identification information about spectrum │
  │                 aggregating mode                    │
  └───────────────────────────────────────────────────┘
                          │
  ┌───────────────────────────────────────────────────┐
  │ 1103. Obtain a position of the time frequency resource │
  │ according to the allocation information about resource │
  └───────────────────────────────────────────────────┘
                          │
                    ┌───────────┐
                  ╱   End     ╲
                  ╲           ╱
                    └───────────┘
```

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2007002122 A1